Europäisches Patentamt

European Patent Office

Office européen des brevets

(19)

(11) Veröffentlichungsnummer: **0 139 982**

**B1**

(12)

# EUROPÄISCHE PATENTSCHRIFT

(45) Veröffentlichungstag der Patentschrift:
18.05.88

(21) Anmeldenummer: 84109966.6

(22) Anmeldetag: 22.08.84

(51) Int. Cl.⁴: **G 05 D 13/62, B 60 K 41/08**

(54) Steuereinrichtung für ein Strassenfahrzeug.

(30) Priorität: 26.09.83 DE 3334726

(43) Veröffentlichungstag der Anmeldung:
08.05.85 Patentblatt 85/19

(45) Bekanntmachung des Hinweises auf die Patenterteilung:
18.05.88 Patentblatt 88/20

(84) Benannte Vertragsstaaten:
CH DE FR IT LI SE

(56) Entgegenhaltungen:
GB-A-2 012 892
GB-A-2 042 105

(73) Patentinhaber: WABCO Westinghouse
Fahrzeugbremsen GmbH, Am Lindener Hafen 21
Postfach 91 12 80, D-3000 Hannover 91 (DE)

(72) Erfinder: Der Erfinder hat auf seine Nennung
verzichtet

(74) Vertreter: Schrödter, Manfred, WABCO
Westinghouse Fahrzeugbremsen GmbH Am
Lindener Hafen 21 Postfach 91 12 80, D-3000
Hannover 91 (DE)

## Beschreibung

Die Erfindung bezieht sich auf eine Steuereinrichtung für ein Straßenfahrzeug gemäß dem Oberbegriff des Patentanspruchs 1.

Die Erfindung bezieht sich vornehmlich auf Nutzfahrzeuge mit einem die Drehzahl stufenweise variierenden Getriebe, obwohl sie auch bei Fahrzeugen mit Automatik-Getrieben Vorteile bietet.

In zunehmendem Maße werden automatisch schaltende Getriebe, Schalthilfen oder Schaltempfehlungen in Kraftfahrzeugen verwendet. Die Umschaltsignale für diese Einrichtungen werden aus äußeren und fahrzeuginternen Bedingungen ermittelt. Erhöhte Schwierigkeiten, richtige Umschaltsignale zu erzeugen, treten besonders in bergigem Gelände auf und ganz besonders bei sich ändernden Steigungen.

Wird beispielsweise eine Bergkuppe bergaufwärts befahren, dann wird aufgrund der kleiner werdenden Steigung das Fahrzeug bei gleicher Antriebsleitung immer mehr beschleunigt. Aufgrund der höher werdenden Motordrehzahl wird bald ein Kriterium zum Umschalten des Getriebes in einen höheren Gang erreicht sein. Ein Umschalten ist jedoch evtl. unzweckmäßig, da sich hinter der Bergkuppe ein Gefälle befinden könnte und dann der neue höhere Gang wegen zu großer Geschwindigkeit unzweckmäßig ist und das Getriebe wieder zurückgeschaltet werden muß.

Ganz ähnliche Probleme treten auch bei der Befahrung einer Bergkuppe abwärts auf. Auch hier wäre es unzweckmäßig, in einen höheren Gang zu schalten, solange das Gefälle noch größer wird, da dadurch die Bremswirkung des Motors abnehmen würde.

Wird beispielsweise ein Tal befahren, dann ist es hangabwärts auch in diesem Falle unzweckmäßig, zu früh hochzuschalten, da der Fahrer die Leistung des Motors bis zu höheren Motordrehzahlen ausnutzen möchte, um Schwung zu holen für den nachfolgenden Berg. Ganz besonders auch bei Befahrung eines Tals bergaufwärts ist es wichtig, nicht schon frühzeitig in einen höheren Gang zu schalten, da die Steigung so groß werden kann daß das erforderliche Antriebsmoment in einem höheren Gang zu einem etwas späteren Zeitpunkt gar nicht aufgebracht werden könnte und dann wieder zurückgeschaltet werden müßte.

Der Erfindung liegt die Aufgabe zugrunde, Kriterien zu schaffen mit deren Hilfe Fahrzustände der erwähnten Art sicher erkannt werden können, und entsprechende Signale zur Steuerung der Aggregate des Antriebsstranges, also des Motors, der Kupplung und des Getriebes, zur Verfügung zu stellen.

Diese Aufgabe wird durch die im Patentanspruch 1 enthaltene Erfindung gelöst. Die Unteransprüche enthalten zweckmäßige Weiterbildungen der Erfindung.

Ein besonderer Vorteil der Erfindung liegt darin, daß die Fahrzustände "Bergkuppe aufwärts", "Bergkuppe abwärts", "Tal aufwärts" und "Tal abwärts" einzeln sicher erkannt werden können, so daß die entsprechenden Signale in Auswerteschaltungen genau den äußeren Gegebenheiten entsprechend weiter verwertet werden können.

Das zur Auswertung erforderliche Fahrzeug-Gewicht wird zweckmäßigerweise auf die in der deutschen Patentanmeldung DE-A-3 246 201 vorgeschlagene Weise ermittelt, da sich so mit geringem Aufwand eine ausreichende Genauigkeit ergibt. Das Gewicht kann aber auch direkt gemessen werden.

Die Erfindung wird im folgenden anhand eines Ausführungsbeispiels, das in einer Zeichnung dargestellt ist, näher erläutert.

Fig. 1 zeigt in vereinfachter Darstellung die wesentlichen Elemente eines von einer Antriebsmaschine angetriebenen Fahrzeugs.

Fig. 2 zeigt schematisch einen Straßenverlauf mit Bergkuppe und Tal.

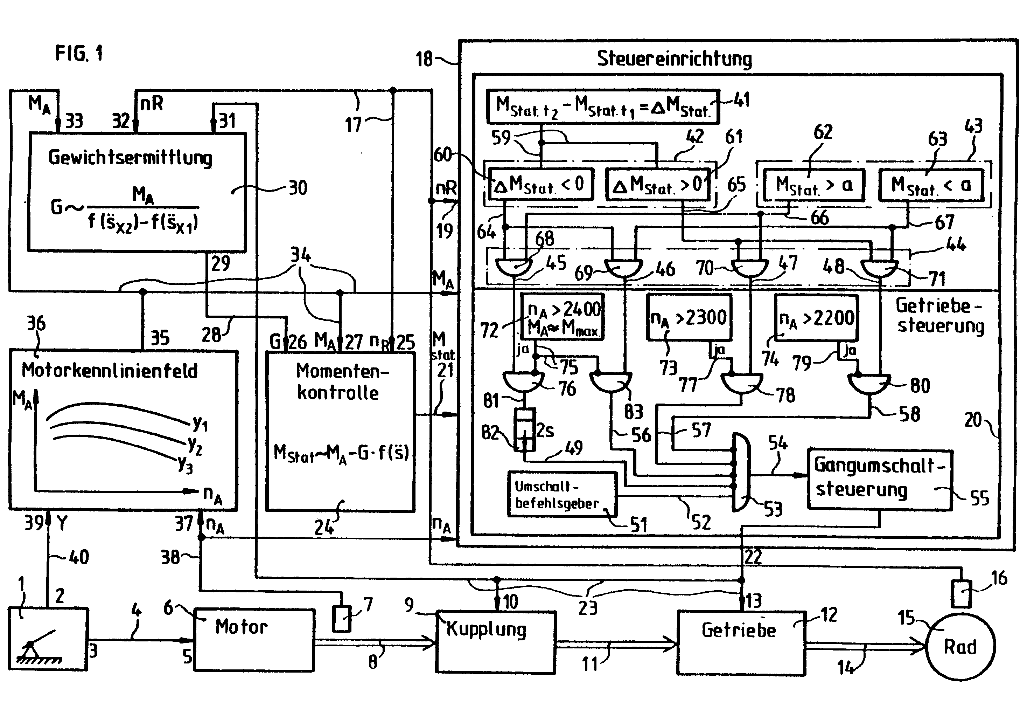

Gemäß Fig. 1 dient als Antriebsmaschine ein Verbrennungsmotor 6, dessen Kraftstoffzufuhr mittels eines Gebers 1 steuerbar ist. Über eine Welle 8 ist der Motor 6 mit einer Kupplung 9 verbunden, die ihrerseits über eine Welle 11 mit einem Getriebe 12 verbunden ist.

Das Getriebe 12 dient zum Antrieb einer Achse 14, die ihrerseits die angetriebenen Fahrzeugräder des Fahrzeugs antreibt. Von den angetriebenen Rädern des Fahrzeugs ist der Einfachheit halber nur das Rad 15 dargestellt.

Der Geber 1 für die Steuerung der Kraftstoffzufuhr des Motors 6 weist einen Signalausgang 3 auf, der über eine Signalleitung 4 mit einem Signaleingang 5 des Motors 6 verbunden ist. Der Geber 1 ist ferner mit einer Einrichtung versehen, die die Stellung des Gebers 1 als Signalgröße y darstellt. Diese Signalgröße y ist an einem weiteren Signalausgang 2 des Gebers 1 abrufbar. Im einfachsten Fall enthält der Geber 1 als Steuerglied für die Kraftstoffzufuhr des Motors 6 ein übliches, mechanisch arbeitendes Gaspedal.

Der Geber 1 kann jedoch auch - wie im dargestellten Ausführungsbeispiel - als elektrischer oder elektronischer Geber ausgebildet sein, wobei der Motor 6 entsprechend mittels eines Steuersignals steuerbar ist.

Die zwischen der antriebsseitigen Welle 8 und der abtriebsseitigen Welle 11 angeordnete. Kupplung 9 ist mittels eines Steuersignals betätigbar, das einem Signaleingang 10 der Kupplung 9 zuführbar ist.

Das Getriebe 12 ist ebenfalls elektrisch steuerbar, wobei ein Signaleingang 13 des Getriebes 12 zum Empfang entsprechender Steuersignale zum Einlegen des jeweils gewünschten oder erforderlichen Ganges dienen. Sowohl die Kupplung 9 als auch das Getriebe 12 können im einfachsten Fall rein mechanisch betätigt werden. In diesem Fall stellen die Signaleingänge 10 und 13 symbolhaft die Verbindung von Kupplungs-Betätigungsmechanismen und Getriebe-Betätigungsmechanismen mit den entsprechenden Betätigungseinrichtungen für die Kupplung 9 und das Getriebe 12 dar.

In einer Momenten-Kontrolleinrichtung 24 wird ein jeweiliges stationäres Antriebsmoment $M_{stat}$ dadurch bestimmt, daß die Differenz zwischen dem tatsächlichen vom Motor 6 aufgebrachten jeweiligen momentanen Antriebsmoment $M_A$ des Fahrzeugs und einer solchen Rechengröße bestimmt wird, die sich als das Produkt aus dem Gewicht des Fahrzeugs und dem Rechenwert der momentanen Beschleunigung des Fahrzeugs ergibt. Das stationäre Antriebsmoment $M_{stat}$ ist das Moment, welches zum beschleunigungslosen Antrieb des Fahrzeugs erforderlich wäre. Um die erwähnte Differenz berechnen zu können, werden der Momenten-Kontrolleinrichtung 24 über einen Signaleingang 27 das transformierte momentane Antriebsmoment $M_A$ des Motors 6, über einen Signaleingang 26 das Gewicht G des Fahrzeugs und über einen Signaleingang 25 die Drehzahl $n_R$ des angetriebenen Rades 15 zugeführt.

Der Signaleingang 27 der Momenten-Kontrolleinrichtung 24 ist über eine Leitung 34 an den Signalausgang 35 eines Motor-Kennlinienfeld-Speichers 36 angeschlossen, der an dem erwähnten Signalausgang 35 ein dem momentanen Antriebsmoment des Motors 6 entsprechendes Signal zur Verfügung stellt.

Der Signaleingang 26 der Momenten-Kontrolleinrichtung 24 ist über eine Signalleitung 28 an eine Gewichtsermittlung 30 zur Ermittlung des Gewichts des Fahrzeugs angeschlossen. An einem Signalausgang 29 der Gewichtsermittlung 30 steht ein dem Gewicht des Fahrzeugs entsprechendes Signal zur Verfügung.

Der Signaleingang 25 der Momenten-Kontrolleinrichtung 24 schließlich ist über eine Signalleitung 17 mit einem Drehzahlgeber 16 zur Erfassung der Rad-Drehzahl $n_R$ verbunden. In der Momenten-Kontrolleinrichtung 24 wird durch Differenzierung aus dem zeitlichen Verlauf der Drehzahl $n_R$ des Rades 15 die Beschleunigungsgröße $\ddot{s}$ des Fahrzeugs berechnet.

Das jeweilige momentane Antriebsmoment $M_A$ des Motors 6 wird aus einem Motor-Kennlinienfeld 36 ermittelt, welches die Abhängigkeit der folgenden Größen voneinander enthält: Momentanes Antriebsmoment $M_A$ des Motors 6, Drehzahl $n_A$ des Motors 6 und Stellung y des Gebers (Gaspedal) 1. Im dargestellten Ausführungsbeispiel enthält der Speicher 36 für drei verschiedene Werte ($y_1$, $y_2$, $y_3$) der Stellung y des Gebers 1 je eine Kennlinie für die Abhängigkeit des momentanen Antriebsmomentes $M_A$ von der Drehzahl $n_A$. Unter einem Motor-Kennlinienfeld sind auch solche Kennlinienfelder zu verstehen, die den Betriebszustand des Motors indirekt beschreiben, wie beispielsweise ein Kennlinienfeld, das die Abhängigkeit von Antriebsmoment $M_A$, Drehzahl $n_A$ und der Einspritzzeit enthält.

Weiterhin sind unter "Momenten" auch Antriebsgrößen allgemein zu verstehen, also z. B. auch Leistungsgrößen oder solche vergleichbaren Größen, die die Antriebsmomente lediglich als eine von mehreren Rechengrößen enthalten.

Die Stellung y des Gebers 1 wird einem Signaleingang 39 des Speichers 36 über eine Signalleitung 40 zugeführt, die ihrerseits an den Signalausgang 2 des Gebers 1 angeschlossen ist. Die Drehzahl $n_A$ des Motors 6 wird mittels eines die Welle 8 abtastenden Sensors 7 ermittelt und über eine Signalleitung 38 einem Signaleingang 37 des Speichers 36 zugeführt. Der Kennlinienfeld-Speicher 36 ist so ausgebildet, daß er für jedes Wertepaar $y/n_A$ das momentane Antriebsmoment $M_A$ an seinem Signalausgang 35 zur Verfügung stellt. Das Motor-Moment kann mit geeigneten Sensoren auch direkt gemessen werden. Die Drehzahl $n_A$ des Motors 6 kann auch aus der Rad-Drehzahl $n_R$ des Rades 15 berechnet werden, wenn das jeweilige Übersetzungsverhältnis des Getriebes 12 berücksichtigt wird.

In der Gewichtsermittlung 30 zur Ermittlung des Gewichtes des Fahrzeugs wird das Verhältnis zwischen dem momentanen Antriebsmoment $M_A$ des Motors 6 und einer Differenz zweier Rechengrößen gebildet, wobei die erwähnten Rechengrößen jeweils eine der Beschleunigung des Fahrzeugs entsprechende Beschleunigungsgröße enthalten. Diese beiden Beschleunigungsgrößen $\ddot{s}_{x2}$ und $\ddot{s}_{x1}$ werden zu verschiedenen Zeiten ermittelt, wobei die eine Beschleunigungsgröße vorzugsweise zu einem Zeitpunkt ermittelt wird, in dem sich das Fahrzeug in einem antriebslosen Zustand z. B. in einer Schaltpause befindet. In diesem antriebslosen Zustand wird das Fahrzeug nicht wesentlich beschleunigt oder verzögert.

Um die erwähnte Rechenoperation durchführen zu können, wird der Gewichtsermittlung 30 über die Signalleitung 34 und einem Signaleingang 33 das momentane Antriebsmoment $M_A$ des Motors 6 zugeführt. Der zur Bildung der Beschleunigungsgrößen $\ddot{s}_{x2}$ und $\ddot{s}_{x1}$ erforderliche zeitliche Verlauf der Drehzahl $n_R$ des angetriebenen Rades 15 wird über die Signalleitung 17 einem Signaleingang 32 der Gewichtsermittlung 30 zugeführt. Über die Signalleitungen 23 schließlich wird einem Signaleingang 31 der Gewichtsermittlung 30 der Zeitpunkt mitgeteilt, zu dem die Kupplung 9 geöffnet ist. Damit kann zwischen solchen Zeiten, in denen das Fahrzeug dem Antrieb durch den Motor 6 unterliegt und solchen Zeiten, in denen das Fahrzeug nicht dem Antrieb des Motors 6 unterliegt, unterschieden werden. Zu diesen unterschiedlichen Zeiten werden auch die Beschleunigungsgrößen $\ddot{s}_{x2}$ und $\ddot{s}_{x1}$ gemessen bzw. bestimmt.

Die allgemeine Formel zur Ermittlung des Fahrzeuggewichts G läutet:

$$G = \frac{M_{A1} - M_{A2}}{f(\bar{s}_{x1}) - f(\bar{s}_{x2})}$$

Werte mit Index 1 sind zum Zeitpunkt 1 und Werte mit Index 2 sind zum Zeitpunkt 2 ermittelt.

Neben dem oben beschriebenen Sonderfall. $M_A = 0$, der für die Schaltpause gilt, kann auch der Sonderfall $f(\bar{s}_{x2}) = 0$ ausgewertet werden. Dieser gilt für unbeschleunigte Fahrt.

Die obige Gleichung kann natürlich auch allgemein, ohne die Sonderfälle abzuwarten, ausgewertet werden. Dabei ist immer darauf zu achten, daß die beiden Meßpunkte zeitlich nicht zu weit auseinander liegen. Um jedoch eine ausreichende Genauigkeit für die Gewichtsgröße zu erhalten, sollte die Differenz der Antriebsmomente $M_{A1}$ und $M_{A2}$ möglichst groß gewählt werden.

Die Gewichtsermittlung 30 kann auch so ausgebildet sein, daß verschiedene ermittelte Gewichtsgrößen G zur Bildung eines Mittelwertes für die Gewichtsgrößen verwendet werden und daß der so ermittelte Mittelwert der Gewichtsgrößen eine vorbestimmte Änderung nicht überschreitet.

Um sicherzustellen, daß auch dann, wenn in der Gewichtsermittlung 30 z. B. wegen zu kurzer Fahrzeit, noch kein ausreichend genauer Wert für die Gewichtsgröße G vorliegt, in der Momenten-Kontrolleinrichtung 24 einen brauchbaren Wert für das stationäre Antriebsmoment $M_{stat}$ bestimmen zu können, ist es vorteilhaft, statt der von der Gewichtsermittlung 30 ermittelten Gewichtsgrößen G zunächst eine mittlere Gewichtsgröße $G_0$ zu verwenden, die z. B. einem halbbeladenen Fahrzeug entspricht.

Für eine sichere Bestimmung und Berechnung der Gewichtsgröße G eignet sich in vorteilhafter Weise ein in der Gewichtsermittlung 30 vorgesehener Mikrocomputer, mit dem insbesondere auch die zeitabhängigen Rechenvorgänge bezüglich der Beschleunigungsgrößen auf einfache Weise realisiert werden können.

Zur Steuerung des Getriebes 12 ist eine schematisch dargestellte Getriebesteuerung 20 vorgesehen, die Bestandteil einer Steuereinrichtung 18 zur Steuerung des Getriebes und weiterer Aggregate (nicht dargestellt) ist. Der Getriebesteuerung werden die Werte der Raddrehzahl $n_R$, des Motormomentes $M_A$, des stationären Momentes $M_{stat}$ und der Motordrehzahl $n_A$ zugeführt. Im einfachsten Fall arbeitet die Getriebesteuerung 20 so, daß das Getriebe 12 in Abhängigkeit von der Geschwindigkeit des Fahrzeugs und somit in Abhängigkeit von der Drehzahl $n_R$ der angetriebenen Räder automatisch geschaltet wird. Zur Erfassung der Drehzahl $n_R$ des angetriebenen Rades 15 dient der Sensor 16, dessen Drehzahl-Signal über die Signalleitung 17 einem Signaleingang 19 der Steuereinrichtung 18 zugeführt ist. Über einen Signalausgang 22 und entsprechende Signalleitungen 23 ist die Steuereinrichtung 18 mit dem Signaleingang 13 des Getriebes 12 und dem Signaleingang 10 der Kupplung 9 verbunden.

Wenn mittels der Getriebesteuerung 20 in Abhängigkeit von der Geschwindigkeit des Fahrzeugs und unter Berücksichtigung vorgegebener Auswahlkriterien ein neuer Gang festgelegt wird, wird die Kupplung 9 über ihren Signaleingang 10 betätigt und anschließend bei getrennter Kupplung das Getriebe 12 über seinen Signaleingang 13 von der Getriebesteuerung 20 umgeschaltet. Danach wird dann die Kupplung 9 wieder geschlossen.

Die Steuerung bzw. Betätigung der Kupplung 9 und des Getriebes 12 können mechanisch über Servomotoren der Getriebesteuerung 20 erfolgen.

Zu den vorstehend erwähnten Auswahlkriterien, nach denen in der Getriebesteuerung 20 jeweils ein neuer Gang festgelegt wird, gehört auch eine Überprüfung, ob der neue Betriebspunkt nach dem Einlegen des ausgewählten neuen Ganges in der Nähe des verbrauchsgünstigen Betriebsbereiches liegen würde.

Um die Darstellung zu vereinfachen, ist die Einrichtung zur Erzeugung der Schaltsignale schematisch als Umschaltbefehlsgeber 51 dargestellt. Der Umschaltbefehlsgeber 51 gibt über eine Leitung 52, ein Sperrglied 53 und eine Leitung 54 einen Umschaltbefehl an eine Gangumschaltsteuerung 55. Diese steuert dann über den Ausgang 22 die für den Gangwechselvorgang am Getriebe 12 und der Kupplung 9 vorgesehenen Hilfszylinder (nicht dargestellt) in zeitlich richtiger Reihenfolge. Statt der Gangumschaltsteuerung kann auch eine Schaltempfehlungs-Anzeige angesteuert werden.

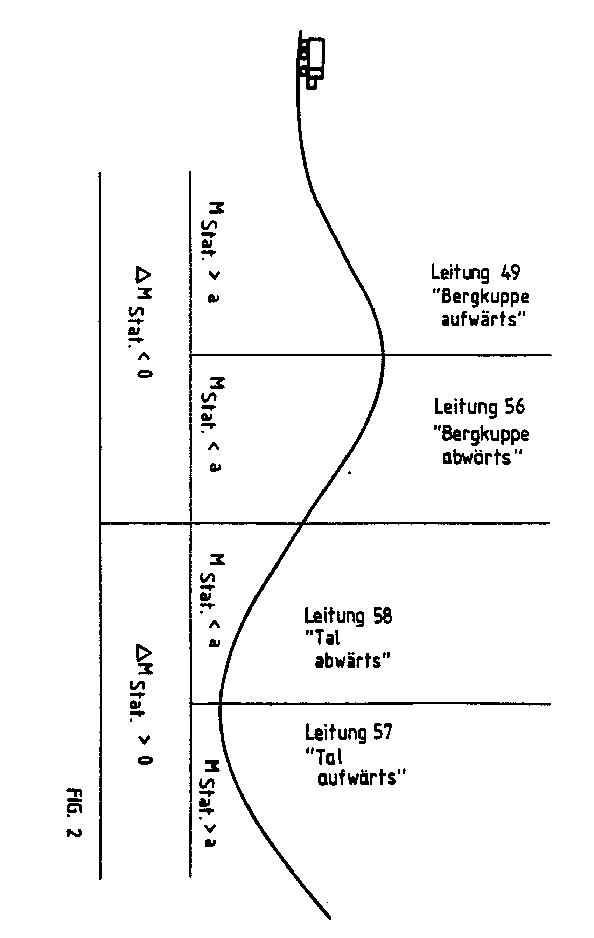

Gemäß der Erfindung kann das vom Umschaltbefehlsgeber 51 über die Leitung 52 abgegebene Schaltsignal im Sperrglied 53 in besonderen Fahrzuständen gesperrt werden. Dieses ist immer dann der Fall, wenn an einer der Leitungen 49, 56, 57 oder 58 ein Signal ansteht. Die Signale der Leitungen 49, 56, 57 und 58 charakterisieren der Reihenfolge nach die Fahrzustände "Bergkuppe aufwärts", "Bergkuppe abwärts", "Tal aufwärts", und "Tal abwärts", bei denen ein Umschalten in einen anderen Gang unzweckmäßig ist (vergl. Fig. 2).

Das Signal der Leitung 49, "Bergkuppe aufwärts", entsteht auf folgende Weise: Zunächst wird festgestellt, ob sich das stationäre Antriebsmoment $M_{stat}$ ändert, was ein Charakteristikum für sich ändernde Straßensteigung ist. Dieses geschieht, indem man in einer ersten Einrichtung 41 die Differenz zweier stationärer Antriebsmomente $M_{stat}(t_1)$ und $M_{stat}(t_2)$ bildet, die in einem zeitlichen Abstand zu zwei hintereinander liegenden Zeitpunkten $t_1$ und $t_2$ ermittelt wurden.

Die Bildung der Differenz der stationären Antriebsmomente $M_{stat}$ kann in Abständen von 2 - 10 sec. hintereinander erfolgen und wird während des Betriebs des Fahrzeugs ständig durchgeführt. Der Wert $\Delta M_{stat}$ wird über Leitungen 59 an eine zweite, das Vorzeichen des Änderungswertes

ΔM$_{stat}$ ermittelnde zweite Einrichtung 42 übertragen. Anstelle des stationären Momentes M$_{stat}$ kann hier und im folgenden auch direkt ein Wert für die Straßensteigung p verwendet werden, falls dieser im Fahrzeug verfügbar ist.

Mit der zweiten Einrichtung 42 wird festgestellt, ob die Fahrbahnsteigung größer oder kleiner wird. Mit einem Kriterium 60 wird geprüft, ob der Wert ΔM$_{stat}$ kleiner als Null ist. Wäre dieses der Fall, würde das bedeuten, daß die Fahrbahnsteigung abnimmt. Dieses Signal wird über eine Leitung 64 an ein UND-Glied 8 weitergegeben.

Dieses Signal ist für sich schon eine wertvolle Fahrzustandsgröße, die sich vorteilhaft zur Steuerung verschiedener Fahrzeugaggregate, z. B. des Motors, verwenden ließe. Eine Verfeinerung läßt sich erreichen, wenn man prüft, ob das Fahrzeug gerade bergauf oder bergab fährt.

Dies geschieht in einer dritten, eine Steigung oder ein Gefälle ermittelnden Einrichtung 43. In einem Kriterium 62 wird geprüft, ob das stationäre Antriebsmoment M$_{stat}$ größer ist als ein vorgegebener Betrag a. Der Betrag a kennzeichnet den in der Ebene auftretenden Fahrwiderstand. Er kann vorteilhaft durch z. B. Fahrgeschwindigkeit und andere Fahrzeugbetriebsparameter variiert werden. Ist M$_{stat}$ größer als der vorgegebene Betrag a, wird über eine Leitung 66 ein Signal an das UND-Glied 68 gegeben.

Liegen beide Signale auf den Leitungen 64 und 66 am Eingang des UND-Gliedes 68 vor, wird vom UND-Glied 68 über eine Leitung 45 ein Signal an ein Sperr-Glied 76 gegeben. Das Signal in der Leitung 45 tritt also immer dann auf, wenn eine Bergkuppe aufwärts befahren wird. Auch dieses Signal ließe sich zur Steuerung des Fahrzeugs sehr effektiv verwenden. Im vorliegenden Falle wird es allerdings für die spezielle Aufgabe der Getriebesteuerung weiterverarbeite t und mit anderen Kriterien verknüpft.

In einem weiteren Kriterium 72 wird geprüft, ob die Motordrehzahl n$_A$ in der Nähe der maximalen Motordrehzahl liegt, die bei einem Dieselmotor für Nutzfahrzeuge etwa n$_A$ = 2400 U/min beträgt und ob der Motor gleichzeitig mit maximaler Leistung bzw. max. Moment betrieben wird. Daraus kann dann der Schluß gezogen werden, daß der Fahrer keine schwierige Verkehrssituation, wie z. B. eine nachfolgende Talfahrt, erwartet und ein Wechsel des Ganges möglich wäre. Wenn das Kriterium 72 also erfüllt ist, wird ein entsprechendes Signal über eine Leitung 75 an einen invertierten Eingang des Sperrgliedes 76 gegeben.

Das Signal auf der Leitung 45 ("Bergkuppe aufwärts") kann also das Sperrglied 76 dann passieren, wenn das Kriterium 72 nicht erfüllt ist, wenn also die Motordrehzahl oder das Motormoment klein ist. Das Signal in der Ausgangsleitung 81 des Sperrgliedes 76 passiert ein Zeitglied 82 mit einer Verzögerung von etwa 2 sec und läuft über eine Leitung 49 zum Sperrglied 53. Es sperrt dort das Umschalten des Getriebes in einen anderen, höheren Gang.

Ist die Bergkuppe zu Ende und erlischt das Signal in der Leitung 81, dann verlängert das Zeitglied 82 das eine Umschaltung sperrende Signal in der Leitung 49 um die vorgegebene Zeitdauer von 2 sec.

Dieses soll eine Umschaltung des Getriebes nach einer Bergkuppe verhindern, weil unmittelbar darauf ein Gefälle folgen kann. In diesem Fall ist ein Hochschalten wegen der dann geringeren Bremswirkung des Motors nicht erwünscht.

Auf ganz ähnliche Weise wird das die Gangumschaltung sperrende Signal "Bergkuppe abwärts" ermittelt. Hierzu wird von dem Kriterium 60 über die Leitung 64 ein Signal an ein weiteres UND-Glied 69 abgegeben.

Weiterhin wird auch von einem Kriterium 63 (Gefällefahrt) über eine Leitung 67 ein Signal an das UND-Glied 69 gegeben. Liegen beide Signale vor, wird über eine Leitung 46 ein den Fahrzustand "Bergkuppe abwärts" charakterisierendes Signal an ein Sperrglied 83 gegeben. Dieses kann das Sperrglied 83 dann passieren und am Sperrglied 53 eine Gangumschaltung sperren, wenn das oben erwähnte Kriterium 72 nicht erfüllt ist.

Auch das die Gangumschaltung sperrende Signal "Tal aufwärts" wird ermittelt, indem in einem Kriterium 61 geprüft wird, ob ΔM$_{stat}$ größer als Null ist (zunehmende Steigung) und dann ein Signal über eine Leitung 65 an ein UND-Glied 70 gegeben wird. Weiterhin muß das Kriterium 62 über die Leitung 66 ein Signal an das UND-Glied 70 abgeben, um ein Signal "Tal aufwärts" in einer Leitung 47 zu erzeugen, das über eine Leitung 57 am Sperrglied 53 eine automatische Gangumschaltung dann sperrt, wenn ein Kriterium 73 (n$_A$ > 2300) nicht erfüllt ist (wenn also die Motordrehzahl nicht in der Nähe der maximalen Motordrehzahl liegt).

Zuletzt wird noch das eine Gangumschaltung sperrende Signal "Tal abwärts" hergestellt, wenn vom Kriterium 61 über die Leitung 65 und vom Kriterium 63 über die Leitung 67 an ein UND-Glied 71 gleichzeitig Signale abgegeben werden und das Ausgangssignal des UND-Glieds 71 über eine Leitung 48 und ein Sperrglied 80 über eine Leitung 58 an das Sperrglied 53 gegeben wird. Gemäß einem Kriterium 74 (n$_A$ > 2200) wird das Sperrsignal auf der Leitung 58 aber nur dann abgegeben, wenn die Drehzahl nicht in der Nähe der maximalen Motordrehzahl liegt. Die in den Kriterien 72, 73, 74 angegebenen Drehzahlen sind ungefähre Werte.

Um den Fahrer-Willen nicht zu überspielen, kann die Getriebesteuerung so ausgebildet sein, daß die oben erläuterten Sperrsignale für eine Schalt-Automatik oder für eine Schalt-Anzeige gelten, daß aber der Fahrer trotzdem jederzeit schalten kann, wenn es die Verkehrs-Situation erfordert.

Eine weitere Möglichkeit zur Ausnutzung der gewonnenen Signale für Berg- und Talfahrt ist ihre Verwendung zur Motor-Steuerung (nicht dargestellt). So können die Signale auf den Leitungen 45 bis 48 z. B. dazu verwendet werden, um bei einem Fahrzeug, das sich am Beginn einer Steigung ("Tal aufwärts") befindet, einen oder mehrere Zylinder des Motors zuzuschalten, die vorher aus ökonomischen Gründen abgeschaltet waren. Umgekehrt können im Zustand "Bergkuppe abwärts" frühzeitig Zylinder abgeschaltet werden.

**Patentansprüche**

1. Steuereinrichtung für ein Straßenfahrzeug, das von einem Motor über ein Getriebe angetrieben wird, mit einer Getriebesteuerung zur Ermittlung zeitlich richtiger Umschaltsignale aus äußeren und fahrzeuginternen Bedingungen, <u>gekennzeichnet durch folgende Merkmale:</u>
a) der Steuereinrichtung (18) werden die Werte der Motordrehzahl $n_A$, des Motormoments $M_A$ und des in einer Momentenkontrolle (24) berechneten stationären Momentes $M_{stat}$, das zur unbeschleunigten Fahrt erforderlich ist, zugeleitet oder in ihr errechnet;
b) die Steuereinrichtung (18) weist eine erste Einrichtung (41) auf, welche zu verschiedenen Zeitpunkten $t_1$, $t_2$ ermittelte Werte des stationären Momentes $M_{stat}$ bildet und daraus einen Differenzwert $\Delta M_{stat}$ oder die Steigung von $M_{stat}$ bestimmt;
c) die Steuereinrichtung (18) weist eine zweite Einrichtung (42) auf, die das Vorzeichen des Differenzwertes $\Delta M_{stat}$ oder der Steigung von $M_{stat}$ bestimmt;
d) die Steuereinrichtung (18) weist eine dritte Einrichtung (43) auf, die den Wert von $M_{stat}$ mit einem vorgegebenen Wert a vergleicht;
e) die Ausgangssignale der zweiten und dritten Einrichtung (42, 43) sind logisch durch UND-Glieder (68, 69, 70, 71) derart miteinander verknüpft, daß an den Ausgängen der UND-Glieder (68, 69, 70, 71) Signale für die Fahrzustände "Bergkuppe aufwärts", "Bergkuppe abwärts", "Tal abwärts" und "Tal aufwärts" anstehen;
f) die die Fahrzustände "Bergkuppe aufwärts", "Bergkuppe abwärts", "Tal abwärts" und "Tal aufwärts" kennzeichnenden Signale auf den Leitungen (45, 46, 47, 48) steuern ein Sperrglied (53) zum Sperren eines Umschaltbefehlsgebers (51) einer Getriebesteuerung (20) an.

2. Steuereinrichtung nach Anspruch 1, <u>dadurch gekennzeichnet,</u> daß statt des stationären Momentes $M_{stat}$, des Differenzwertes $\Delta M_{stat}$ oder der Steigung von $M_{stat}$ die Fahrbahnsteigung P, der Differenzwert $\Delta p$ oder ein die Änderung der Fahrbahnsteigung p kennzeichnender Wert verwendet wird.

3. Steuereinrichtung nach Anspruch 1 oder 2, <u>dadurch gekennzeichnet,</u> daß die Sperrung durch das Sperrglied (53) in den Fahrzuständen "Bergkuppe aufwärts" und "Bergkuppe abwärts" nur dann erfolgt, wenn ein erstes Kriterium (72), das prüft, ob die Motordrehzahl $n_A$ nahe der maximalen Motordrehzahl $n_{max}$ und das Motormoment $M_A$ nahe dem maximalen Motormoment $M_{max}$ liegt, nicht erfüllt ist.

4. Steuereinrichtung nach einem der Ansprüche 1 bis 3, <u>dadurch gekennzeichnet,</u> daß die Sperrung durch das Sperrglied (53) in den Fahrzuständen "Tal abwärts" und "Tal aufwärts" nur dann erfolgt, wenn ein zweites und drittes Kriterium (74 und 73) zur Prüfung, ob die Motordrehzahl $n_A$ nahe der maximalen Motordrehzahl $n_{max}$ liegt, nicht erfüllt ist.

5. Steuereinrichtung nach den Ansprüchen 3 oder 4, <u>dadurch gekennzeichnet,</u> daß
a) das erste Kriterium (72) lautet:
$n_A > 2400$ U/min und $M_A \approx M_{max}$
b) das zweite Kriterium (74) lautet:
$n_A > 2200$ U/min
c) das dritte Kriterium (73) lautet:
$n_A > 2300$ U/min.

6. Steuereinrichtung nach einem der Ansprüche 1 bis 5 <u>dadurch gekennzeichnet,</u> daß das Signal für den Fahrzustand "Bergkuppe aufwärts" mittels eines Verzögerungsgliedes (82) verzögert wird.

7. Steuereinrichtung nach Anspruch 1, <u>dadurch gekennzeichnet,</u> daß der Wert a dem bei ebener Fahrt auftretenden stationären Moment $M_{stat}$ entspricht.

8. Steuereinrichtung nach Anspruch 1, <u>dadurch gekennzeichnet,</u> daß der Wert a abhängig von der Fahrzeuggeschwindigkeit ist.

9. Steuereinrichtung nach einem der Ansprüche 1 bis 8, <u>dadurch gekennzeichnet,</u> daß die die Fahrzustände "Bergkuppe aufwärts", "Bergkuppe abwärts", "Tal abwärts" und "Tal aufwärts" kennzeichnenden Signale an den Leitungen (45, 46, 47, 48) verknüpft werden mit weiteren Fahrzustandsgrößen wie Gaspedalstellung und Motordrehzahl und zur Steuerung des Motors (6) verwendet werden.

10. Steuereinrichtung nach einem der Ansprüche 1 bis 9, <u>dadurch gekennzeichnet,</u> daß zur Ausführung der Operationen mindestens ein Mikrocomputer vorgesehen ist.

**Claims**

1. Control device for a road vehicle driven by an engine by way of a transmission, having a transmission control device for determining correctly timed gear-change signals from external conditions and from conditions inside the vehicle, characterised by the following features:
a) there are supplied to, or calculated in, the control device (18) the values for the engine speed $n_A$, the engine moment $M_A$ and the stationary moment $M_{stat}$, calculated in a moment-monitoring unit (24), which is required for unaccelerated travel;

b) the control device (18) has a first device (41) which forms values for the stationary moment $M_{stat}$ determined at various points in time $t_1$, $t_2$, and determines therefrom a differential value $\Delta M_{stat}$ or the gradient of $M_{stat}$;

c) the control device (18) has a second device (42) which determines the sign of the differential value $\Delta M_{stat}$ or of the gradient of $M_{stat}$;

d) the control device (18) has a third device (43) which compares the value of $M_{stat}$ with a predetermined value a;

e) the output signals of the second and third devices (42, 43) are logically linked to one another by AND elements (68, 69, 70, 71) in such a manner that signals for the driving conditions "up to a hilltop", "down from a hilltop", "down to a valley bottom" and "up from a valley bottom" are available at the outputs of the AND elements (68, 69, 70, 71); and

f) the signals characterising the driving conditions "up to a hilltop", "down from a hilltop", "down to a valley bottom", "up from a valley bottom" in the lines (45, 46, 47, 48) trigger a blocking member (53) in order to inhibit a gear-change command transmitter (51) of a transmission control device (20).

2. Control device according to claim 1, characterised in that instead of the stationary moment $M_{stat}$, the differential value $\Delta M_{stat}$ or the gradient of $M_{stat}$, the carriageway gradient P, the differential value $\Delta p$ or a value characterising the change in the carriageway gradient p is used.

3. Control device according to claim 1 or 2, characterised in that the inhibiting by the blocking member (53) under the driving conditions "up to a hilltop" and "down from a hilltop" takes place only when a first criterion (72), which tests whether the engine speed $n_A$ is close to the maximum engine speed $n_{max}$ and the engine moment $M_A$ is close to the maximum engine moment $M_{max}$, has not been met.

4. Control device according to any one of claims 1 to 3, characterised in that the inhibiting by the blocking member (53) takes place under the driving conditions "down to the valley bottom" and "up from the valley bottom" only when a second criterion and a third criterion (74 and 73) for testing whether the engine speed $n_A$ is close to the maximum engine speed $n_{max}$ have not been met.

5. Control device according to claim 3 or 4, characterised in that:

a) the first criterion (72) is as follows:
$n_A > 2400$ rpm and $M_A \approx M_{max}$

b) the second criterion (74) is as follows:
$n_A > 2200$ rpm, and

c) the third criterion (73) is as follows:
$n_A > 2300$ rpm.

6. Control device according to any one of claims 1 to 5, characterised in that the signal for the driving condition "up to a hilltop" is delayed by means of a time delay element (82).

7. Control device according to claim 1, characterised in that the value a corresponds to the stationary moment $M_{stat}$ arising when the driving is on the level.

8. Control device according to claim 1, characterised in that the value a is dependent on the vehicle speed.

9. Control device according to any one of claims 1 to 8, characterised in that the signals characterising the driving conditions "up to a hilltop", "down from a hilltop", "down to a valley bottom" and "up from a valley bottom" in the lines (45, 46, 47, 48) are linked to other driving condition parameters, such as accelerator position and engine speed, and are used to control the engine (6).

10. Control device according to any one of claims 1 to 9, characterised in that at least one microcomputer is provided for carrying out the operations.

## Revendications

1. Appareil de commande pour un véhicule routier propulsé par un moteur par l'intermédiaire d'une boîte de vitesses, comprenant une commande de boîte pour produire des signaux de changement de rapport à des moments adéquats à partir de conditions externes et internes au véhicule, caractérisé en ce que:

a) il reçoit ou calcule les valeurs de la vitesse de rotation du moteur $n_A$, du couple moteur $M_A$ et du couple stationnaire $M_{stat}$, nécessaire à la marche stable, non eccélérée, et qui est calclé dans un contrôleur de coupLe (24);

b) il comporte un premier dispositif (47) qui forme des valeurs, relevées à différents instants $t_1$, $t_2$, du couple stationnaire $M_{stat}$ et détermine à partir d'elles une valeur différentielle $\Delta M_{stat}$ ou la pente de $M_{stat}$;

c) il comporte un deuxième dispositif (42) qui détermine le signe de la valeur différentielle $\Delta M_{stat}$ ou de la pente de $M_{stat}$;

d) il comporte un troisième dispositif (43) qui compare la valeur de $M_{stat}$ avec une valeur a préfixée;

e) les signaux de sortie des deuxième et troisième dispositifs (42, 43) sont soumis à une combinaison logique par des éléments ET (68, 69, 70, 71), de manière que les sorties des éléments ET (68, 69, 70, 71) présentent des signaux représentatifs des conditions de roulement ou situations "montée en haut d'une côte", "descente depuis le haut d'une côte", "descente en fond de vallée" et "montée depuis le fond d'une vallée";

f) les signaux caractérisant les situations "montée en haut d'une côte", "descente depuis le haut d'une côte", "descente en fond de vallée" et "montée depuis le fond d'une vallée", appliqués sur des lignes (45, 46, 47, 48), commandent un organe d'arrêt (53) en vue du blocage d'un émetteur d'ordre de changement de rapport (57) en faisant partie de la commande de boîte (20).

2. Appareil selon la revendication 7, caractérisé en ce que la pente p de la route, la valeur différentielle $\Delta p$ ou une variation de la pente p de la route est utilisée à la place du couple stationnaire $M_{stat}$, de la valeur différentielle $\Delta M_{stat}$, ou de la pente de $M_{stat}$.

3. Appareil selon la revendication 1 ou 2, caractérisé en ce que le blocage de signal par l'organe d'arrêt (53) dans les situations "montée en haut d'une côte" et "descente depuis le haut d'une côte" a lieu seulement s'il n'est pas répondu à un critère d'un élément à critère (72) qui vérifie si la vitesse de rotation $n_A$ du moteur est voisine de la vitesse maximale $n_{max}$ du moteur et si le couple moteur $M_A$ est voisin du couple moteur maximal $M_{max}$.

4. Appareil selon une des revendications 1 à 3, caractérisé en ce que le blocage de signal par l'organe d'arrêt (53) dans les situations "descente en fond de vallée" et "montée depuis un fond de vallée" a lieu seulement s'il n'est pas répondu à un second et à un trosième critère d'un deuxième (74) et d'un troisième élément à critère (73) pour vérifier si la vitesse de rotation $n_A$ du moteur est voisine de la vitesse maximale $n_{max}$ du moteur.

5. Appareil selon la revendication 3 ou 4, caractérisé en ce que:
a)  le critère du premier élément à critère (72) est:
   $n_A > 2400$ tr/min et $M_A \approx M_{max}$
b)  le critère du second élément à critère (74) est:
    $n_A > 2200$ tr/min
c)  le critère du troisième élément à critère (73) est:
   $n_A > 2300$ tr/min.

6. Appareil selon une des revendications 1 à 5, caractérisé en ce que le signal pour la situation "montée en haut d'une côte" est retardé par un temporisateur (82).

7. Appareil selon la revendication 1, caractérisé en ce que la valeur a correspond au couple stationnaire $M_{stat}$ en cas de circulation du véhicule en plaine.

8. Appareil selon la revendication 1, caractérisé en ce que la valeur a dépend de la vitesse du véhicule.

9. Appareil selon une des revendications 1 à 8, caractérisé en ce que les signaux caractérisant les situations "montée en haut d'une côte", "descente depuis le haut d'une côte", "descente en fond de vallée" et "montée depuis le fond d'une vallée" sur les lignes (45, 46, 47, 48) sont soumis à une combinaison avec d'autres grandeurs relatives aux conditions de roulement, telles que la position de la pédale d'accélérateur et la vitesse de rotation du moteur, et que ces signaux sont utilisés pour commander le moteur (6).

10. Appareil selon une des revendications 1 à 9, caractérisé par la prévision d'au moins un micro-ordinateur pour l'exécution des différentes opérations.

FIG. 1

$\Delta M$ Stat. $< 0$

M Stat. $> a$

Leitung 49
"Bergkuppe
aufwärts"

M Stat. $< a$

Leitung 56
"Bergkuppe
abwärts"

M Stat. $< a$

Leitung 58
"Tal
abwärts"

$\Delta M$ Stat. $> 0$

Leitung 57
"Tal
aufwärts"

M Stat. $> a$

FIG. 2